Europäisches Patentamt

European Patent Office

Office européen des brevets

(11) Publication number: **0 482 525 A2**

# EUROPEAN PATENT APPLICATION

(21) Application number: **91117825.9**

(22) Date of filing: **18.10.91**

(51) Int. Cl.⁵: **C11D 3/22**, C11D 3/386, G02C 13/00

(30) Priority: **25.10.90 JP 285971/90**
        **25.10.90 JP 285972/90**

(43) Date of publication of application:
**29.04.92 Bulletin 92/18**

(84) Designated Contracting States:
**DE FR GB**

(71) Applicant: **NIPPON CONTACT LENS INC.**
**10-3, Yoshimoto-cho, Nakagawa-ku**
**Nagoya-shi, Aichi-ken(JP)**

(72) Inventor: **Ito, Takao**
**271-2, Fujimori, Meitou-ku**
**Nagoya-shi, Aichi-ken(JP)**

(74) Representative: **Howden, Christopher Andrew**
**FORRESTER & BOEHMERT**
**Franz-Joseph-Strasse 38**
**W-8000 München 40(DE)**

(54) Contact lenses cleaning and preserving solution.

(57) This invention provides a maintenance solution for contact lenses or a cleaning solution for contact lenses which can maintain or improve the wearing comfort of contact lenses. The solution comprises a monosaccharide or disaccharide, an enzyme produced by baccilli and at least one surface active agent.

EP 0 482 525 A2

Rank Xerox (UK) Business Services
(-/2.17/2.0)

THIS INVENTION relates to a solution for treating contact lenses, especially for treating oxygen permeable contact lenses, more particularly to a maintenance solution into which contact lenses are put when they are taken out, so that the lenses can be treated by the solution while the user is sleeping, for example.

It will be understood that during use, contact lenses become coated with tear components, so that wettability of the contact lenses becomes reduced and the lenses are rendered less fit for use, for example by being rendered less comfortable to wear. To counteract this effect, a cleaning solution is used for contact lenses. However, it is difficult to wash away strongly coated deposits from the surface of contact lenses. Protein among the extraneous matters is specially difficult to remove from the lens surfaces since adhered protein cannot be removed by using a conventional cleaning solution for contact lenses.

It is customary, for this reason, in order to remove deposits, to wash contact lenses once a week in a cleaning solution for contact lenses containing proteolytic enzyme or to scape the deposits off the surface by using a cleaner containing abrasives.

It is however very troublesome for a user to wash contact lenses once a week using a cleaning solution containing proteolytic enzyme. Also it is not possible to remove fully proteinic deposits, which have accumulated and become denatured on the surfaces of lenses over the span of a week, by washing once a week even using a cleaning solution containing proteolytic enzyme. For this reason, it is proposed to scrape such deposits off by using a cleaner containing abrasives. However, this task is also troublesome and capable of harming the contact lenses.

It is among the objects of the invention to provide a means of cleaning contact lenses whereby they may be kept comfortable to wear or even rendered more comfortable to wear, without risk of damage to the lenses.

According to one aspect of the invention there is provided a solution for treating contact lenses, containing at least one saccharide which is selected from among various monosaccharides and disaccharides, an enzyme produced by baccilli genus and at least one surface active agent.

In the case of a maintenance solution for contact lenses in accordance with the invention this may, for example comprise, in comparison with 100 parts of a saccharide selected from among various monosaccharides and disaccharides, 0.01-4 parts of enzyme produced by baccilli genus, preferably 0.1-2 parts and 0.01-80 parts of the surface active agents, preferably 6-80 parts. For example, a maintenance solution embodying the invention may comprise 25-90 parts by weight of saccharide, preferably 50-80 parts by weight, more preferably 50-75 parts by weight, 0.01-1 parts by weight of enzyme produced by baccilli, preferably 0.1-0.5 parts by weight, and 0.01-20 parts by weight of surface active agents, preferably 1-20 parts by weight approximately, more preferably 1-10 parts by weight of such surface active agents.

In the case of a cleaning solution for contact lenses, embodying the invention, this may, for example, comprise, in comparison with 100 parts of a saccharide selected among various monosaccharides and disaccharides, 1-40 parts of enzyme produced by baccilli genus, preferably 3-30 parts, and 0.01-80 parts of the surface active agents, preferably 5-80 parts. Preferably, a cleaning solution in accordance with the invention comprises 25-90 parts by weight of saccharide, preferably 50-80 parts by weight approximately, more preferably 50-75 parts by weight, 1-10 parts by weight of enzyme produced by baccilli genus, preferably 3-7 parts by weight, and 0.01-20 parts by weight of surface active agents, preferably 1-20 parts by weight approximately, more preferably 1-10 parts by weight.

Glucose, mannose, rhamnose, galactose, fructose, arabinose, xylose, ribose are examples of saccharides which may be used in a solution embodying the invention.

Subtilisin, thermolysin, sphaericase and aminopeptidase are examples of enzymes produced by baccilli, which may be used in solutions embodying the invention.

As surface active agents, anionic surface active agents like polyoxyethylenealkylphenylether sodium sulfricester, polyoxyethylenealkyl sodium sulfate and so on and nonionic surface active agents like polyoxyethylenealkylether, polyoxyethylenealkylphenylether, polyoxyethylene-polyoxypropylene block polymer and so on may be used. It is possible to use an anionic surface active agent without a nonionic surface active agent or a nonionic surface active agent without an anionic surface active agent. However it is preferable to use both an anionic and a non-ionic surface active agent together. Especially, it is preferable that the content of anionic surface agents is not less than a half of the content of nonionic surface active agents.

Examples of embodiments of the invention are disclosed below together with solutions, not embodying the invention, for purposes of comparison.

2

| Embodiment-1. | |
|---|---|
| Glucose | 30 % by weight |
| Sorbitol | 20 % by weight |
| Nonionic surface active agent(polyoxyethlene-polyoxypropylene copolymer) | 2 % by weight |
| Anionic surface active agent(polyoxyethlenealkyl sodium sulfate) | 1 % by weight |
| Subtilisin(2.5 AU/g) | 0.1 % by weight |
| Sodium chloride | 1 % by weight |

A maintenance solution for oxygen permeability contact lenses is produced by dissolving the above components at each density in fresh water.

| Embodiment-2. | |
|---|---|
| Glucose | 50 % by weight |
| Nonionic surface active agent(polyoxyethlene-polyoxypropylene copolymer) | 2 % by weight |
| Anionic surface active agent(polyoxyethylenealkylphenylether sodium sulfricester) | 1 % by weight |
| Subtilisin(2.5 AU/g) | 0.1 % by weight |
| Sodium chloride | 1 % by weight |
| Borax | 0.3 % by weight |

A maintenance solution for oxygen permeability contact lenses is produced by dissolving the above components at each density in fresh water.

| Embodiment-3. | |
|---|---|
| Glucose | 70 % by weight |
| Nonionic surface active agent(polyoxyethlene-polyoxypropylene copolymer) | 4 % by weight |
| Anionic surface active agent(polyoxyethylenealkylpbenylether sodium sulfricester) | 6 % by weight |
| Subtilisin(2.5 AU/g) | 0.1 % by weight |
| Sodium chloride | 1 % by weight |
| Borax | 0.3 % by weight |

A maintenance solution for oxygen permeability contact lenses is produced by dissolving the above components at each density in fresh water.

| Embodiment-4. | |
|---|---|
| Glucose | 50 % by weight |
| Nonionic surface active agent(polyoxyethlene-polyoxypropylene copolymer | 3 % by weight |
| Anionic surface active agent(polyoxyethylenealkylphenylether sodium sulfricester) | 3 % by weight |
| Subtilisin(2.5 AU/g) | 0.1 % by weight |
| Sodium chloride | 1 % by weight |
| Borax | 0.3 % by weight |

A maintenance solution for oxygen permeability contact lenses is produced by dissolving the above components at each density in fresh water.

| Embodiment-5. | |
|---|---|
| Glucose | 60 % by weight |
| Nonionic surface active agent(polyoxyethlene-polyoxypropylene copolymer) | 2 % by weight |
| Anionic surface active agent(polyoxyethylenealkylphenylether sodium sulfricester) | 3 % by weight |
| Subtilisin(2.5 AU/g) | 0.5 % by weight |
| Sodium chloride | 1 % by weight |
| Borax | 0.3 % by weight |

A maintenance solution for oxygen permeability contact lenses is produced by dissolving the above components at each density in fresh water.

| Embodiment-6. | |
|---|---|
| Glucose | 70 % by weight |
| Nonionic surface active agent(polyoxyethlene-polypropylene copolymer) | 4 % by weight |
| Anionic surface active agent(polyoxyethylenealkylphenylether sodium sulfricester) | 2 % by weight |
| Subtilisin(2.5 AU/g) | 0.4 % by weight |
| Sodium chloride | 1 % by weight |
| Borax | 0.3 % by weight |

A maintenance solution for oxygen permeability contact lenses is produced by dissolving the above components at each density in fresh water.

| Comparison-1. | |
|---|---|
| Nonionic surface active agent(polyoxyethlene-polyoxypropylene copolymer) | 2 % by weight |
| Anionic surface active agent(polyoxyethylenealkyl sodium sulfate) | 1 % by weight |
| Subtilisin(2.5 AU/g) | 0.1 % by weight |
| Sodium chloride | 1 % by weight |

A maintenance solution for contact lenses is produced by dissolving the above components at each density in fresh water.

| Comparison-2. | |
|---|---|
| Glucose | 30 % by weight |
| Sorbitol | 20 % by weight |
| Subtilisin(2.5 AU/g) | 0.1 % by weight |
| Sodium chloride | 1 % by weight |

A maintenance solution for contact lenses is produced by dissolving the above components at each density in fresh water.

| Comparison-3. | |
|---|---|
| Glucose | 30 % by weight |
| Sorbitol | 20 % by weight |
| Nonionic surface active agent(polyoxyethlene-polyoxypropylene copolymer) | 2 % by weight |
| Anionic surface active agent(polyoxyethylenealkyl sodium sulfate) | 1 % by weight |
| Sodium chloride | 1 % by weight |

A maintenance solution for contact lenses is produced by dissolving the above components at each density in fresh water.

TEST PROCEDURE

Contact lenses on which deposits like eye fat and so on adhered were put into each of the above solutions for one night. The results were as set out in Table 1 below.

TABLE 1

| | Results of Cleaning | Wettability of lenses |
|---|---|---|
| Embodiment-1 | ○ | ○ |
| Embodiment-2 | ○ | ○ |
| Embodiment-3 | ○ | ○ |
| Embodiment-4 | ○ | ○ |
| Embodiment-5 | ○ | ○ |
| Embodiment-6 | ○ | ○ |
| Comparison-1 | △ | ○ |
| Comparison-2 | ○ | × |
| Comparison-3 | × | ○ |

In the column of Results of Cleaning,

The symbol ○ means that deposits are removed.

The symbol △ means that deposits remain.

The symbol ·× means that deposits are not removed.

In the column of Wettability of lenses,

The symbol ○ means good wettability.

The symbol × means bad wettability.

In these Embodiment-1 to 6 and Comparison-1 to 3, the maintenance solutions for contact lenses which are prepared 10 days before examination were used. Because, a maintenance solution for contact lenses is used after several days storage.

Judging from the results, the maintenance solutions for contact lenses produced by the invention can remove deposits on contact lenses and also can keep contact lenses wettability good.

| Embodiment-7. | |
|---|---|
| Glucose | 30 % by weight |
| Sorbitol | 20 % by weight |
| Nonionic surface active agent (polyoxyethlenealkylether) | 2 % by weight |
| Anionic surface active agent(polyoxyethylenealkyl sodium sulfate) | 1 % by weight |
| Subtilisin(2.5 AU/g) | 3.5% by weight |
| Sodium chloride | 1 % by weight |

A cleaning solution for oxygen permeability contact lenses is produced by dissolving the above components at each density in fresh water.

| Embodiment-8. | |
|---|---|
| Glucose | 50 % by weight |
| Nonionic surface active agent(polyoxyethlenealkylether) | 2 % by weight |
| Anionic surface active agent(polyoxyethylenealkylphenylether sodium sulfricester) | 1 % by weight |
| Subtilisin(2.5 AU/g) | 3.5 % by weight |
| Sodium chloride | 1 % by weight |
| Borax | 0.3 % by weight |

A cleaning solution for oxygen permeability contact lenses is produced by dissolving the above components at each density in fresh water.

| Embodiment-9. | |
|---|---|
| Glucose | 70 % by weight |
| Nonionic surface active agent(polyoxyethylenealkylether) | 2 % by weight |
| Anionic surface active agent(polyoxyethylenealkylphenylether sodium sulfric ester) | 5 % by weight |
| Subtilisin(2.5 AU/g) | 3.5 % by weight |
| Sodium chloride | 1 % by weight |
| Borax | 0.3 % by weight |

A cleaning solution for oxygen permeability contact lenses is produced by dissolving the above components at each density in fresh water.

| Embodiment-10. | |
|---|---|
| Glucose | 50 % by weight |
| Nonionic surface active agent(polyoxyethlenealkylether) | 3 % by weight |
| Anionic surface active agent(polyoxyethylenealkylphenylether sodium sulfric ester) | 3 % by weight |
| Subtilisin(2.5 AU/g) | 7 % by weight |
| Sodium chloride | 1 % by weight |
| Borax | 0.3 % by weight |

A cleaning solution for oxygen permeability contact lenses is produced by dissolving the above components at each density in fresh water.

| Embodiment-11. | |
|---|---|
| Glucose | 60 % by weight |
| Nonionic surface active agent(polyoxyethlenealkylether) | 1 % by weight |
| Anionic surface active agent(polyoxyethylenealkylphenylether sodium sulfric ester) | 5 % by weight |
| Subtilisin(2.5 AU/g) | 5.5 % by weight |
| Sodium chloride | 1 % by weight |
| Borax | 0.3 % by weight |

A cleaning solution for oxygen permeability contact lenses is produced by dissolving the above components at each density in fresh water.

| Embodiment-12. | |
|---|---|
| Glucose | 70 % by weight |
| Nonionic surface active agent(polyoxyethlenealkylether) | 2 % by weight |
| Anionic surface active agent(polyoxyethylenealkylphenylether sodium sulfric ester) | 5 % by weight |
| Subtilisin(2.5 AU/g) | 5 % by weight |
| Sodium chloride | 1 % by weight |
| Borax | 0.3 % by weight |

A cleaning solution for oxygen permeability contact lenses is produced by dissolving the above components at each density in fresh water.

| Comparison-4. | |
|---|---|
| Nonionic surface active agent(polyoxyethlenealkylether) | 2 % by weight |
| Anionic surface active agent(polyoxyethylenealkyl sodium sulfate) | 1 % by weight |
| Subtilisin(2.5 AU/g) | 3.5 % by weight |
| Sodium chloride | 1 % by weight |

A cleaning solution for contact lenses is produced by dissolving the above components at each density in fresh water.

| Comparison-5. | |
|---|---|
| Glucose | 30 % by weight |
| Sorbitol | 20 % by weight |
| Nonionic surface active agent(polyoxyethlenealkylether) | 2 % by weight |
| Anionic surface active agent(polyoxyethylenealkylphenylether sodium sulfric ester) | 1 % by weight |
| Sodium chloride | 1 % by weight |

A cleaning solution for contact lenses is produced by dissolving the above components at each density in fresh water.

TEST PROCEDURE

Contact lenses on which deposits like protein or eye fat adhered were washed in samples each comprising a quantity of a known maintenance solution ($O_2$ FRESH-EX produced by NIPPON CONTACT LENS INC.) into which some drops of the respective one of the above solutions were put. The results of this test as regards removal of deposits on the contact lenses were as set out in Table 2 below.

TABLE 2

| | Results of Cleaning |
|---|---|
| Embodiment 7 | Deposits removed fully |
| Embodiment 8 | Deposits removed fully |
| Embodiment 9 | Deposits removed fully |
| Embodiment 10 | Deposits removed fully |
| Embodiment 11 | Deposits removed fully |
| Embodiment 12 | Deposits removed fully |
| Comparison 4 | Deposits remain, not removed |
| Comparison 5 | Deposits remain, not removed |

As before, the cleaning solution made up using the products of Embodiments 7 to 12 above and the products of Comparisons 4 and 5 above were prepared ten days before the test, to take account of the fact that a cleaning solution for contact lenses may be used after having been stored for several days before making up such solution.

The features disclosed in the foregoing description, in the following claims and/or in the accompanying drawings may, both separately and in any combination thereof, be material for realising the invention in diverse forms thereof.

**Claims**

1. A solution for treating contact lenses, containing at least a monosaccharide or disaccharide, an enzyme produced by baccilli and at least one surface active agent.

2. A solution according to claim 1, and which is a maintenance solution for contact lenses, which comprises 25-90 parts by weight of monosaccharide or disaccharide, 0.01-1 part by weight of enzyme produced by baccilli, and .01 to 20 parts by weight of surface active agent.

3. A solution according to claim 1, which is a maintenance solution for contact lenses, and which comprises 50 - 75 parts by weight of monosaccharide or disaccharide, 0.01 to 1 part by weight of enzyme produced by baccilli and 1 to 10 parts by weight of surface active agent.

4. A solution according to claim 1, which is a cleaning solution for contact lenses, and which comprises 25-90 parts by weight of monosaccharide or disaccharide, 1 to 10 parts by weight of enzyme produced by baccilli and 0.01 -20 parts by weight of surface active agent.

5. A solution according to claim 1, which is a cleaning solution for contact lenses, and which comprises 50-75 parts by weight of monosaccharide or disaccharide, 1-10 parts by weight of enzyme produced by baccilli and 1-10 parts by weight of surface active agent.

6. A solution according to any of claims 1 to 5 containing at least one nonionic surface active agent and at least one anionic surface agent.

7. A solution according to claim 6 in which the content of the anionic surface agent is not less than a half of the content of the nonionic surface active agent.

8. A solution for treating contact lenses containing a monosaccharide and/or a disaccharide, at least one surface active agent, and an enzyme selected from the group comprising substilisin, thermolysin, sphaericase and aminopeptidase.

9. A solution according to claim 8 wherein the saccharide is selected from the group comprising glucose, mannose, rhamnose, galactose, fructose, arabinose, xylose and ribose.